(19) Europäisches Patentamt European Patent Office Office européen des brevets

(11) **EP 4 530 052 A1**

(12) **EUROPEAN PATENT APPLICATION**

(43) Date of publication:
**02.04.2025 Bulletin 2025/14**

(21) Application number: **23306612.5**

(22) Date of filing: **27.09.2023**

(51) International Patent Classification (IPC):
**B29D 11/00** *(2006.01)*

(52) Cooperative Patent Classification (CPC):
**B29D 11/00009; B29D 11/00326; B29D 11/00346; B29D 11/00865**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Essilor International**
**94220 Charenton-Le-Pont (FR)**

(72) Inventors:
• **TOKARSKI, Zbigniew**
  **Woodstock, CT 06281 (US)**
• **IKIZER, Burcin**
  **Clinton, MA 01510 (US)**

(74) Representative: **Plasseraud IP**
**104 Rue de Richelieu**
**CS92104**
**75080 Paris Cedex 02 (FR)**

(54) **METHOD FOR MANUFACTURING AN OPTICAL ARTICLE**

(57)  A method for manufacturing an optical article (50a, 50b, 50c) comprising:
- incorporating (102) optically functional nanoparticles (16; 20) into a substrate (22), thus obtaining an optical coating (24);
- applying (106, 108, 110) said optical coating (24) on a surface of an optical support element (26', 26", 26‴) or incorporating said optical coating (24) as a layer within said optical support element (26', 26", 26‴), thus obtaining said optical article (50a, 50b, 50c).

FIG. 4

EP 4 530 052 A1

## Description

### Technical field

This invention relates to a method for manufacturing an optical article to modify the path of the light that enter an eye of a patient, for myopia control and prevention.

Optically functional nanoparticles, that are on the order of the wavelength of visible light, are incorporated into a binder matrix and then embedded into a substrate, that is incorporated into a lens or, alternatively, directly on a wafer or lens surface.

### Background information and prior art

The eye is an optical sensor in which light from external sources is focused, by the cornea and crystalline lens components of the eye lens, onto the surface of the retina, an array of wavelength-dependent photosensors. Each of the various shapes that the eye lens can adopt is associated with a focal length at which external light rays are focused to produce inverted images on the surface of the retina that correspond to external images observed by the eye. The eye lens focuses light emitted by, or reflected from external objects that lie within a certain range of distances from the eye, and less optimally focuses, or fails to focus objects that lie outside that range of distances.

In normal-sighted individuals, the axial length of the eye, or distance from the eye lens to the surface of the retina, corresponds to a focal length for near-optimal focusing of distant objects. The eyes of normal-sighted individuals focus distant objects through muscles which apply forces to alter the shape of the eye lens, a process referred to as *"accommodation"*.

Many people, however, suffer from eye-length-related disorders, such as myopia or hyperopia. In myopic individuals, for example, the axial length of the eye is longer than the axial length required to focus distant objects without accommodation. As a result, myopic individuals can view near objects clearly, but objects further away are blurry. While myopic individuals are generally capable of accommodation, the average distance at which they can focus objects is shorter than that of normal-sighted individuals.

Moreover, in myopic individuals, the relative axial length of the eye to overall eye size continues to increase during development, thus leading to increasingly pronounced myopia.

Myopia or other eye-related disorders may be mitigated by therapeutic devices for treating eye-length related disorders.

Known methods disclose the production of light scattering sites on optical lenses to be used by a myopic individual to slow the progression of myopia, these light scattering sites being generated by laser ablation and having spacing and dimensions suitable for randomly scattering a portion of incident light onto the peripheral regions of an eye.

However, prior art technology does not address the following issues:

- the ability to focus an array of scattering light rays before the retina
- steering the scattered white light to a desired/preferred region of the eye's retina;
- decreasing the level of haze as seen by an observer of the individual wearing the optical lenses (i.e., decreasing the ratio of the backward scattered light intensity as seen by the observer to the forward scattered light intensity as seen by the lens wearer); and
- changing the ratio of the scattered RGB light by attenuating certain light wavelengths or converting light from one wavelength into another wavelength, to stimulate the surface of the eye retina and slow the axial growth of the eye.

Accordingly, there is the need to provide an innovative method for manufacturing an optical article that is capable of better control of the direction, intensity, and pattern of the light scatter on the retina of a myopic individual to slow the progression of myopia (or any other related diseases such as hyperopia), maintain their visual acuity, and prevent retinal detachment and blindness due to an overly elongated eyeball.

### Summary

What is provided herein is a method for manufacturing an optical article comprising incorporating optically functional nanoparticles into a substrate, thus obtaining an optical coating, and applying said optical coating on a surface of an optical support element or incorporating said optical coating as a layer within said optical support element, thus obtaining the optical article.

In an embodiment, the optically functional nanoparticles comprise light scattering nanoparticles and photoluminescence nanoparticles.

In an embodiment, the light scattering nanoparticles comprise Mie-type nanoparticles, Kerkel-type nanoparticles and chemically grown nanoparticles embedded into a binder material to obtain host-composite nanoparticles.

In an embodiment, the optical coating is shaped to form a plurality of optically-improved micro-lenses.

Advantageously, the optically-improved micro-lenses are applied to a surface of the optical support element or incorporated as a layer within the optical support element.

In an embodiment, the optical coating is encapsulated between upper and lower layers, wherein the lower layer is directly applied on the surface of the optical support element or incorporated as a layer within the optical support element.

In an embodiment, the optically-improved micro-lenses are dispersed onto a surface of a micro-structured layer having concave or convex microstructures, wherein the micro-structured layer is directly applied on the surface of the optical support element or incorporated as a layer within the optical support element.

In an embodiment, the optical coating incorporating the host-composite nanoparticles is encapsulated between a protective upper layer and a micro-structured lower layer having microstructures, wherein the micro-structured lower layer is directly applied on the surface of the optical support element or incorporated as a layer within the optical support element.

In an embodiment, the optically-improved micro-lenses are applied to a film layer which, in turn, is encapsulated between protective upper and lower layers, the lower layer being directly applied on the surface of the optical support element or incorporated as a layer within the optical support element.

In an embodiment, the optically-improved micro-lenses have respective diameters (D1, D2, D3) of decreasing values according to the following relationship:

$$D1 > D2 > D3$$

wherein a first diameter D1 corresponds to the diameter of a first optically-improved micro-lens placed at the center of the optical support element, a second diameter D2 corresponds to the diameter of second optically-improved micro-lenses placed next to the first optically-improved micro-lens and a third diameter D3 corresponds to the diameter of third optically-improved micro-lenses placed next to the second optically-improved micro-lenses.

In an embodiment, the optically functional nanoparticles comprise compositions among inorganic-type nanoparticles and organic-type nanoparticles, having:

- surfaces among smooth-faced and rough-faced surfaces,
- and/or crystalline structure including a shape among a needle shape and a plate shape,
- and having an optical index among high and low indexes (such as $ZrO_2$, $TiO_2$, acrylate),

said nanoparticles being among at least magneto-dielectric nanoparticles, photoluminescence nanoparticles, chemically grown nanometer-sized particles.

In an embodiment, the binder material comprises PEG, PMMA, PEG-poly (propylene glycol) (PPG)-PEG, acrylics, acrylates, epoxies, oligomers, co-polymers.

In an embodiment, the incorporation of chemically grown nanoparticles into the binder material is performed through emulsification, spray drying, coaxial electrospray system, freeze-drying, coacervation, in situ polymerization, extrusion coating and fluidized bed coating, melt injection, melt extrusion, centrifugal extrusion or dispersion in a host matrix.

Also provided herein is an optical article comprising a lens, an embossed polycarbonate (PC) film with concave or convex microstructures, a wafer, a multi-layered laminate, or a film.

The present disclosure aims also at an eyewear including at least one of the aforesaid optical article and comprising thus a lens, an embossed polycarbonate (PC) film with concave or convex microstructures, a wafer, a multi-layered laminate, or a film.

The present disclosure aims also at an optical article comprising optically functional nanoparticles comprising compositions among inorganic-type nanoparticles and organic-type nanoparticles, having:

- surfaces among smooth-faced and rough-faced surfaces,
- and/or crystalline structure including a shape among a needle shape and a plate shape,
- and having an optical index among high and low indexes (such as ZrO2, TiO2, acrylate),

said nanoparticles being among at least magneto-dielectric nanoparticles, photoluminescence nanoparticles, chemically grown nanometer-sized particles.

## Description of the drawings

Further characteristics and advantages of the present invention will become apparent from the following description, provided merely by way of a non-limiting example, with reference to the attached drawings, in which:

Figure 1 shows a sectional view of an eye of an individual;
Figure 2 shows the pattern of backward and forward Mie scattering on an optically functional nanoparticle;
Figure 3 shows a micro-lens 6 having a plurality of optically functional nanoparticles 16 on it; and
Figure 4 shows the step of a method for manufacturing an optical article according to the present invention.

## Detailed description of embodiments

In the description which follows, the drawing figures are not necessarily to scale, and certain features may be shown in generalized or schematic form in the interest of clarity and conciseness or for informational purposes. In addition, although making and using various embodiments are discussed in detail below, it should be appreciated that as described herein are provided many inventive concepts that may be embodied in a wide variety of contexts. Embodiments discussed herein are merely representative and do not limit the scope of the invention. It will also be obvious to one skilled in the art that all the technical features that are defined relative to a process can be transposed, individually or in combination, to a device and conversely, all the technical features relative to a device can be transposed, individually or in combination, to a process. To avoid unnecessary details for practicing the invention, the description may omit certain information already known to those skilled in the art.

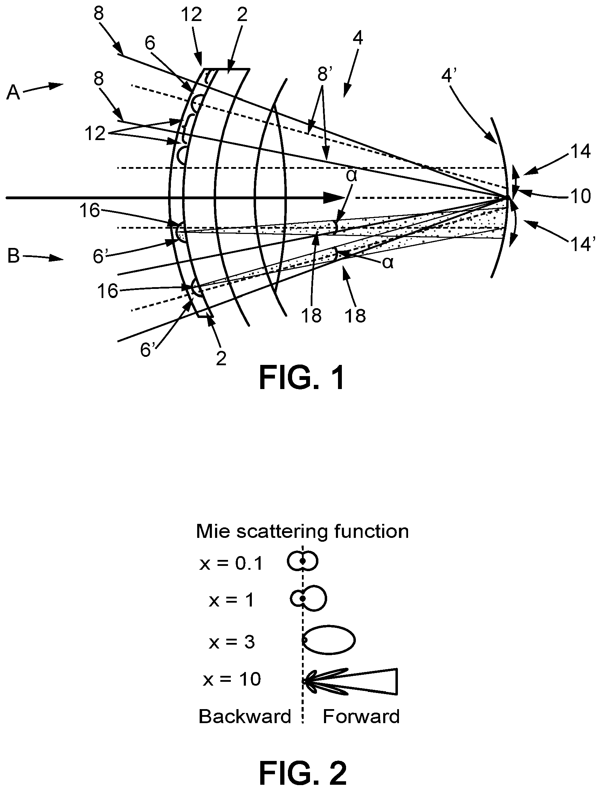

Figure 1 shows a sectional view of an eye of an individual. In a top portion A, according to the prior art, a known lens 2 is placed in front of an eye 4 of an individual. The lens 2 is provided with micro-lenses 6 (e.g., +3.5 diopter), made in a manner per se known on a substrate such as a resist film, to focus incident light rays 8 in front of a retina 4' of the eye 4, so as to produce a blurred image around a macula 10. In fact, it is known that light focused behind the retina in the peripheral region leads to eyeball elongation and that micro-lenses 6 that focus before the retina (peripheral defocus) slow myopia progression.

Incident light rays 8 that travel through portions 12 of the lens 2 without micro-lenses 6 are focused exactly on the macula 10, to generate a high acuity image. Incident light rays 8' that pass through the micro-lenses 6 are deviated along trajectories depending on physical properties of the micro-lenses 6 so that, when they reach the retina 4', they do not focus on a same point, but they impinge the retina 4' in different points of a peripheral defocus area 14. The size of the peripheral defocus area 14 is dependent on the power of each micro-lens 6.

Figure 1 shows, in a bottom portion B, the same lens 2 of the top portion A wherein, according to the method of the present invention further detailed, optically functional nanoparticles 16 have been included in the same substrate of the micro-lenses 6, thus obtaining optically-improved micro-lenses 6'. Such optically functional nanoparticles 16 preferably comprise light scattering nanoparticles and/or photoluminescence nanoparticles, as detailed here below.

The optically functional nanoparticles 16 modify the defocusing effect of the optically-improved micro-lenses 6', in particular, light scattering nanoparticles amplify the defocus area 14' and photoluminescence nanoparticles absorb light having a predetermined wavelength and re-emit light at a different wavelength (preferably based in the red wavelength spectrum).

In the case of light scattering nanoparticles, the dielectric and physical properties and the size of the optically functional nanoparticles 16 influence the degree of Mie destructive interference in the backward scattering direction in favor of scattering in the forward direction, as detailed here below.

Figure 2 shows different backward and forward Mie scattering patterns on a light scattering optically functional nanoparticle 16 as function of the size x of the nanoparticle 16, where x represents the ratio between the nanoparticle size and the wavelength of the incident light rays 8'.

It is known that small particles scatter light and create haze. Usually, the scattering intensity and directional scattering lobes (as shown at the top in Figure 2) are the same in the forward and backward directions, i.e., haze traveling away from a light source (towards the individual wearing the lens 2) equals the haze traveling back towards the light source (back towards an observer looking at the individual). The issue with such micro-scattered light is that the individual wearing the lens 2 and the observer both see the scattered light (haze), thus leading to a lens 2 with a bad aesthetical aspect. Therefore, micro-particles that are in the order of light wavelength (100nm - 3500nm) would scatter light in all directions (forward towards the individual and backward towards the observer).

In order to solve this issue, it has been found that light scattering optically functional nanoparticles 16 that are in the order of light wavelength (100nm - 3500nm) and have also a high refractive index show a Mie-type scattering pattern as shown at the bottom of Figure 2. These nanoparticles will be referred in the following as *"Mie-type nanoparticles"*. With such optically Mie-type nanoparticles 16, less haze travels directly back toward the light source (i.e., towards the observer) and the haze / backscatter lobes takes on a different shape (from one large lobe covering 180 degrees to two or more backscattering lobes at different off-axis angles, as shown at the bottom in Figure 2). Lenses 2 including optically Mie-type nanoparticles 16 have a better aesthetical aspect than the lenses including micro-particles above-mentioned.

As an alternative to the Mie-type nanoparticles 16, to eliminate all backward scattering (toward the light source and the observer), Kerker-type magneto-dielectric nanoparticles 16 can used, which will be referred in the following as *"Kerker-type nanoparticles"*. These Kerker-type nanoparticles 16 have the same dimensions of the Mie-type nanoparticles 16, they have a high refractive index and a dipole and quadrupole vector response that can affect constructive and destructive optical interference in the forward, backward, and off-axis scattering directions. Kerker-type high refractive index materials, with electric and magnetic multipole responses that oscillate in phase and with equal amplitude, suppress optical backscattering (i.e., minimized, near-zero backscattering intensity). Therefore, the Kerker-type nanoparticles 16 shift the scattering profile even more than the Mie-type nanoparticles 16 and have minimal-to-zero back scattering towards the observer (i.e., observer sees less haze on the lens 2), thus leading to lenses 2 having the best aesthetical aspect.

The Kerkel-type nanoparticles represent therefore the alternative solution to the Mie-type nanoparticles showing a *"zero"* back scattering but wherein material alloys choice and sourcing fabrication are more challenging.

Cones 18 in Figure 1 represent the amplitude of the scattered light in the forward relative to backward direction.

The composition, type and size of the light scattering optically functional nanoparticles 16 affect the degree, amplitude and direction of light scattering, hence, the angle $\alpha$ of the cones 18. The physical characteristics of the optically functional nanoparticles 16 are important to create more scatter/haze in the forward direction, toward the individual wearing the lens 2 with the optically-improved micro-lenses 6', and less backscatter toward the observer looking at the individual, as above detailed.

As a further alternative to the Mie-type nanoparticles 16 and to the Kerker-type nanoparticles 16, it is possible to create a "pseudo" Mie-scattering particle by microencapsulating high refractive index nanoparticles having dimensions in the range 10nm -100nm to create a 100nm -3500nm sized hybrid particle that exhibit "pseudo" Mie-scattering particle properties.

Smaller nanoparticles that are not in the preferred size range 100nm - 3500nm required for Mie type light scattering are for example chemically grow high refractive index nanoparticles, that have often a diameter of 10nm. Therefore, a process that allows obtaining a precise control of the size of the optically functional nanoparticles 16 is to chemically grow individual nanoparticles and to prevent such multiple chemically grow nanoparticles from aggregating into non-uniform shapes.

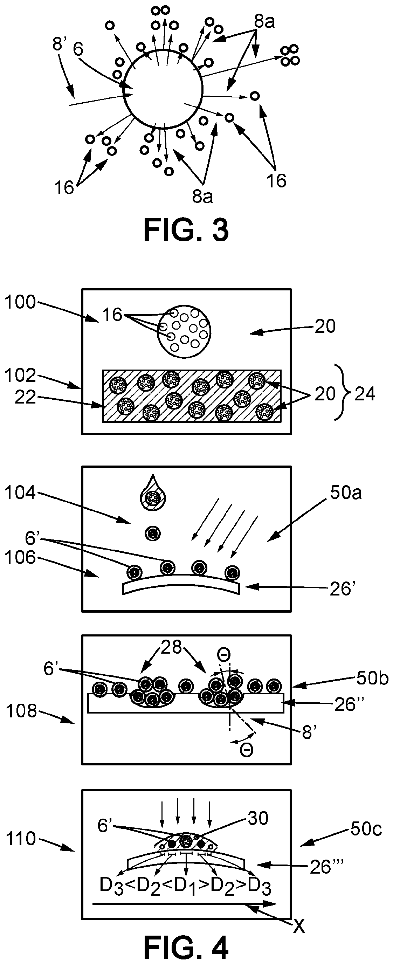

These chemically grown nanoparticles are aggregated to form host-composite nanoparticles 20 (see Figure 4), thus obtaining corresponding optically functional nanoparticles 16. The chemically grown nanoparticles represent a discontinuous phase embedded or incorporated in a continuous material (preferably a binder material such as a polymer). The host-composite nanoparticles 20 (which can be defined as high refractive index, nanoparticle-loaded microcarriers) can be fabricated in the 100nm -3500nm size range and they have the same scattering behavior as the larger Mie-type nanoparticles having a Mie-type light scattering pattern.

The light scattering optically functional nanoparticles 16 comprise therefore the Mie-type nanoparticles, the Kerker-type nanoparticles and the host-composite nanoparticles 20, which require an extra fabrication step.

Thanks to the presence of the light scattering optically functional particles 16, the area of scattered light that strikes the retina 4', i.e., the peripheral defocus area 14', is larger than the peripheral defocus area 14 of scattered light obtained through the micro-lenses 6 without optically functional nanoparticles 16. This means that fewer optically-improved micro-lenses 6' are required to produce the same amount of defocused light obtained with the micro-lenses 6 without optically functional nanoparticles 16, and the larger peripheral defocus area 14' has a stronger effect to decrease myopia progression.

Figure 3 shows a light scattering optically functional nanoparticle 16 which receives the incident light ray 8' and transmit it as a plurality of transmitted rays 8a. The type of optically functional nanoparticle 16, the particle size, the size distribution and the volume to mass load determine the specific wavelength and amplitude at which the incident light ray 8' is absorbed and re-emitted as transmitted rays 8a.

Advantageously, in a preferred embodiment, both type of optically functional nanoparticles 16 (light scattering and photoluminescence) are present on the optically-improved micro-lenses 6'. The light scattering nanoparticles are larger than the photoluminescence nanoparticles and thanks to their simultaneous presence in the same medium, the uniform distribution of transmitted light is improved since photoluminescence nanoparticles absorb the backward light coming from scattering nanoparticles.

The transmitted rays 8a converge (or diverge) depending on the micro-lens polarity (concave vs. convex) and on the refractive index difference across the interface of the optically-improved micro-lens 6'.

Figure 4 shows the step of a method for manufacturing an optical article according to the present invention.

In Figure 4 it is illustrated the fabrication of the host-composite nanoparticles 20 and their incorporation into an optical support element, such as a semi-finished or finished lens, a film or a wafer, to get an optical article, such as for example a lens, advantageously arranged to be used in an eyewear.

An optical wafer as referred in the present description as optical support can be defined as a thin and round part with high clarity. It can be curved or flat. In a useful scope, the optical wafer can be any optical element or optical material formed into a structure by thermoforming, pressure forming, hydroforming, or other shape converting process or initially produced into a thin optical "sub" element by thermoplastic injection molding or thermoset casting in a mold. Materials for the flat wafer or optical element include polycarbonate, cellulose esters (e.g., cellulose triacetate, cellulose acetate proprionate, cellulose acetate butyrate), acrylics, cyclic olefin copolymers, amorphous polyamides, polyethylene-naphthalene, polyethylene terephthalate, polymethyl-pentene, and the like, the known cast lens materials (e.g., MR-7, MR-8, MR10, MR-174, CR-39), and optically transparent film/laminate with little to no haze.

A wafer can be a single film or a multilayered laminate that is shaped from its initial flat state to a dome shape or a wafer can be a thin shaped part that is created by injection molding (IM) of thermoplastic materials or by casting in a mold using thermoset materials. A wafer can then be incorporated into a lens (on surface or in-bulk).

Steps corresponding to the ones here below detailed can be applied in the case of use of Mie-type nanoparticles or Kerker-type nanoparticles instead of host-composite nanoparticles 20.

Similarly, photoluminescence nanoparticles and/or, zirconium dioxide, titanium dioxide, silicon and the like nanoparticles can be also added to the light scattering nanoparticles or can be used alone.

In particular, it is possible to:

- incorporate the micro-lenses 6 and the optically functional nanoparticles 16 in different layers (e.g., on both surfaces of a film or multiple films);

- incorporate the micro-lenses 6 and the optically functional nanoparticles 16 in a same layer (e.g., the micro-lenses 6 on a film and the optically functional nanoparticles 16 in an adhesive formulation to make a laminate or the micro-lenses 6 on a film and the optically functional nanoparticles 16 in a leveling layer formulation (which creates a planar surface) that can be bond to another film with an adhesive to make a laminate);

- to have concave and convex spherical to highly aspherical, diffractive or refractive micro-lens designs to make the light rays 8' converge or diverge depending on the difference in the refractive index across the micro-lens interface (aspheric-type micro-lens designs converge light at different focal points before the retina 4' for myopia prevention while unifocal micro-lens designs are used to focus on the retina to create thinner lenses 2);

- to fabricate the optically-improved micro-lenses 6' using any nanoimprinting techniques per se known (hot embossing, UV imprinting, laser ablation/etching, 3D jetting, 3D additive manufacturing, etc.) by using material formulations that contain the optically functional nanoparticles 16.

In a first step 100 of the method for manufacturing an optical article according to the present invention a plurality of host-composite nanoparticles 20 are formed as above-disclosed. Alternatively, Mie-type nanoparticles or Kerker-type nanoparticles are directly used.

In the following of the description reference will be made to the host-composite nanoparticles 20, however, Mie-type nanoparticles or Kerker-type nanoparticles and/or photoluminescence nanoparticles can be used.

In a second step 102, the host-composite nanoparticles 20 are embedded, as further detailed, into a substrate 22, thus obtaining an optical coating 24. The substrate 22 comprises for example a resist or a coating matrix.

In a third step 104, the optical coating 24 is shaped so as to form a plurality of optically-improved micro-lenses 6', for example by hot embossing, UV imprinting, laser ablation/etching, 3D jetting, 3D additive manufacturing, etc.

In a fourth step 106, the optically-improved micro-lenses 6' are applied on a surface of a first optical support element 26', such as for example a semi-finished or finished lens.

The combination of the first optical support element 26' and the optically-improved micro-lenses 6' represent a first optical article 50a, such as a lens 2.

Alternatively, the optical coating 24 incorporating the host-composite nanoparticles 20 is directly encapsulated (no optically-improved micro-lenses 6' are created) between upper and lower layers, wherein the lower layer is in turn directly applied on the surface of the first optical support element 26', thus obtaining the first optical article 50a. The upper and lower layers may be a film, a coating, a deposition, etc.

In an embodiment, in a further step 108 replacing the fourth step 106, the optically-improved micro-lenses 6' are dispersed onto a surface of a micro-structured layer having concave (or convex) microstructures 28, wherein the micro-structured layer is in turn directly applied on a surface of a second optical support element 26", such as a semi-finished or finished lens. In this case, incident light rays 8' are deviated in correspondence of said concave microstructures 28 of an angle θ. The layer may be a film, a coating, a deposition, etc. The micro-structured layer may be a hot embossed or UV imprinted layer.

The choice of concave or convex microstructures 28 is dictated by the refractive index across the interface of the microstructures 28 (i.e., light traveling from a first material on one side of the microstructure 28 into a second material on the other side of that microstructure 28) and if light should converge or diverge due to the second optical support element 26".

For myopia prevention, the higher refractive index material should be on the concave side of the micro-structure 28 to converge light before the back of the retina 4'.

The combination of the second optical support element 26" and the optically-improved micro-lenses 6' represent a second optical article 50b, such as a lens.

Alternatively, the optical coating 24 incorporating the host-composite nanoparticles 20 is directly encapsulated (no optically-improved micro-lenses 6' are created) between a protective upper layer and a micro-structured lower layer having microstructures 28, wherein the micro-structured lower layer is in turn directly applied on the surface of the second optical support element 26", thus obtaining the second optical article 50b. The micro-structured lower layer may be a hot embossed or UV imprinted layer with concave (or convex) microstructures 28.

The protective upper layer and micro-structured lower layer may have a lower/higher refractive index relative to the refractive index of the optical coating 24 incorporating the host-composite nanoparticles 20.

However, both layers may have higher relative indices relative to common plastic or resin materials.

In an embodiment, in a further step 110 replacing the fourth step 106, optically-improved micro-lenses 6' of different (or uniform) dimensions (diameter, height / depth, shape) are applied to a film layer, or encapsulated into a bonding material 30 which is in turn fixed the film layer. Then, film layer is encapsulated between protective upper and lower layers, wherein the lower layer is in turn directly applied on a surface of a third optical support element 26‴, such as a semi-finished or finished lens.

The combination of the third optical support element 26‴ and the optically-improved micro-lenses 6' represent a third optical article 50b, such as a lens.

The optically-improved micro-lenses 6' or the optical coating 24 incorporating the host-composite nanoparticles 20 here-above mentioned can be applied on the surface of the first optical support element 26', second optical support element 26" or third optical support element 26‴, respectively, or can be incorporated or as a layer within said first optical support element 26', second optical support element 26" or third optical support element 26‴, respectively, in particular placed inside the bulk of such optical support elements (e.g., a layer that is 0.5mm - 1mm from the front surface of a 10mm - 15mm thick semi-finished cast lens).

In Figures 4 spherical micro-lens shapes are shown, however, aspheric, prism, gratings, cylindrical, Fresnel, surface relief patterns, combinatorial optical designs, and/or any other optical lens shapes can be used.

In the case of optically-improved micro-lenses 6' of different dimensions, they have respective diameters D1, D2 and D3 of decreasing values according to the following relationship D1 > D2 > D3, wherein a first diameter D1 corresponds to the diameter of a first optically-improved micro-lens 6' placed at the center of the third optical support element 26‴, a second diameter D2 corresponds to the diameter of second optically-improved micro-lenses 6' placed next to the first optically-improved micro-lens 6' and a third diameter D3 corresponds to the diameter of third optically-improved micro-lenses 6' placed next to the second optically-improved micro-lenses 6'. The combination of the third optical support element 26‴ and the optically-improved micro-lenses 6' represent a third optical article 50c, such as a lens.

The optical coating 24 (i.e., the substrate containing the optically functional nanoparticles 16, namely the host-composite nanoparticles 20, the Mie-type nanoparticles, the Kerker-type nanoparticles and/or the photoluminescence nanoparticles) is applied to the first optical support element 26', second optical support element 26" or third optical support element 26‴ to obtain respectively the first optical article 50a, second optical article 50b or third optical article 50c.

The optically functional nanoparticles 16 comprise different compositions of inorganic/organic-type of nanoparticles having smooth/rough-faced surface or crystalline structure (needle, plate), high/low refractive index nanoparticles ($ZrO_2$, TiOa, acrylate), magneto-dielectric (meta-lens materials) nanoparticles, photoluminescence or chemically grown nanometer-sized nano particles.

The polymer binder material of the host-composite nanoparticles 20 includes PEG, PMMA, PEG-poly (propylene glycol) (PPG)-PEG, acrylics, acrylates, epoxies, oligomers, co-polymers, etc.

The host-composite nanoparticles 20 are advantageously obtained through different techniques, e.g., emulsification, spray drying, coaxial electrospray system, freeze-drying, coacervation, in situ polymerization, extrusion coating and fluidized bed coating, extrusion encapsulation processes such as melt injection, melt extrusion, or centrifugal extrusion (coextrusion).

The host-composite nanoparticles 20 are embedded into the substrate 22 through dispersion in a host matrix to be applied (coated/jetted) as a (semi)continuous layer on top of a film, wafer, or semi-finished or finished lens and cured. In particular, the host-composite nanoparticles 20 are added to an existing micro-structured film to concentrate the host-composite nanoparticle 20 within the optically-improved micro-lenses 6', to increase and focus the scattering effect, and then used as adhesive for a multilayered laminate structure. For example, the embossed polycarbonate (PC), cellulose triacetate (TAC) or another optical film samples with concave microstructures above-mentioned converge light if the host matrix refractive index is equal or higher than the one of the PC film. The blend of transparent host-composite particles 20 in the host matrix increases the refractive index in the same manner as high refractive index nanoparticles (e.g., $ZrO_2$, $TiO_2$) dispersed in the same host matrix but with the extra benefit of larger size for Mie light scattering.

In another embodiment, host-composite nanoparticles 20 having different diameters are sequentially deposited on any of the optical support elements 26', 26", 26‴ to create a pattern and the voids between the host-composite nanoparticles 20 are filled with an adhesive binder to create a microstructure. As an example, droplets of first host-composite nanoparticles 20 are placed at the center of a series of concentric rings. Droplets of second host-composite nanoparticles 20 having smaller diameter are used to fill the space between each concentric ring of the first host-composite nanoparticles 20, with the outermost ring comprising the smallest diameter host-composite nanoparticles 20. This results in a spherical optically-improved micro-lens 6'. Additional micro-lens shapes (prism, aspherical, Fresnel, thoric) can be created with this pattering technique.

The method according to the present invention allows:

- incorporating optically functional nanoparticles into a substrate, wherein the optical functions include Mie light scattering, absorbing/re-emitting functions, optoelectronic functions, etc.;
- obtaining particles whose composition and dimensions are conductive to forward Mie-type scattering;
- producing microstructures of defined dimensions, shape, pattern and optical functions on the surface of a film, a wafer or a lens or within the bulk of a cast lens;

- incorporating a film (with nanoparticles, host composite particles, and/or microstructure patterns) into a multilayered laminate construction;
- incorporating a multilayered film construction or wafer onto/into a lens.

Clearly, the principle of the invention remaining the same, the embodiments and details of production can be varied considerably from what has been described and illustrated purely by way of non-limiting example, without departing from the scope of protection of the present as defined in the attached claims.

**Claims**

1. A method for manufacturing an optical article (50a, 50b, 50c) comprising:

   - incorporating (102) optically functional nanoparticles (16; 20) into a substrate (22), thus obtaining an optical coating (24);
   - applying (106, 108, 110) said optical coating (24) on a surface of an optical support element (26', 26", 26''') or incorporating said optical coating (24) as a layer within said optical support element (26', 26", 26'''), thus obtaining said optical article (50a, 50b, 50c).

2. The method for manufacturing an optical article (50a, 50b, 50c) of claim 1 wherein the optically functional nanoparticles comprise light scattering nanoparticles and photoluminescence nanoparticles.

3. The method for manufacturing an optical article (50a, 50b, 50c) of claim 2, wherein the light scattering nanoparticles comprise Mie-type nanoparticles, Kerkel-type nanoparticles and chemically grown nanoparticles embedded into a binder material to obtain host-composite nanoparticles (20).

4. The method for manufacturing an optical article (50a, 50b, 50c) of any of claims 1 to 3, further comprising:
   - shaping (104) said optical coating (24) to form a plurality of optically-improved micro-lenses (6').

5. The method of claim 4, further comprising:
   - applying (106) the optically-improved micro-lenses (6') to a surface of the optical support element (26') or incorporating said optically-improved micro-lenses (6') as a layer within the optical support element (26').

6. The method of any of claims 1 to 3, wherein the optical coating (24) is encapsulated between upper and lower layers, wherein the lower layer is directly applied on the surface of the optical support element (26') or incorporated as a layer within the optical support element (26').

7. The method of claim 5, wherein the optically-improved micro-lenses (6') are dispersed (108) onto a surface of a micro-structured layer having concave or convex microstructures (28), wherein the micro-structured layer is directly applied on the surface of the optical support element (26") or incorporated as a layer within the optical support element (26").

8. The method of any of claims 1 to 3, wherein the optical coating (24) is encapsulated between a protective upper layer and a micro-structured lower layer having microstructures (28), wherein the micro-structured lower layer is directly applied on the surface of the optical support element (26") or incorporated as a layer within the optical support element (26").

9. The method of claim 5, wherein the optically-improved micro-lenses (6') are applied (110) to a film layer which, in turn, is encapsulated between protective upper and lower layers, the lower layer being directly applied on the surface of the optical support element (26''') or incorporated as a layer within the optical support element (26''').

10. The method of claims 9, wherein the optically-improved micro-lenses (6') have respective diameters (D1, D2, D3) of decreasing values according to the following relationship:

$$D1 > D2 > D3$$

wherein a first diameter (D1) corresponds to the diameter of a first optically-improved micro-lens (6') placed at the center of the optical support element (26'''), a second diameter (D2) corresponds to the diameter of second optically-improved micro-lenses (6') placed next to the first optically-improved micro-lens (6') and a third diameter (D3) corresponds to the diameter of third optically-improved micro-lenses (6') placed next to the second optically-improved micro-lenses (6').

11. The method of any of the preceding claims, wherein the optically functional nanoparticles (16; 20) comprise compositions among inorganic-type nanoparticles and organic-type nanoparticles having:

   - surfaces among smooth-faced and rough-faced surfaces;
   - and/or crystalline structure including a shape among a needle-shape and a plate-shape,
   - and having an optical index among high and low indexes, said nanoparticles being among at least magneto-dielectric nanoparticles, photoluminescence nanoparticles, chemically grown nanometer-sized particles.

**12.** The method of claim 3, wherein the binder material comprises PEG, PMMA, PEG-poly (propylene glycol) (PPG)-PEG, acrylics, acrylates, epoxies, oligomers, co-polymers.

**13.** The method of claim 3, wherein the chemically grown nanoparticles are embedded into the binder material through emulsification, spray drying, coaxial electrospray system, freeze-drying, coacervation, in situ polymerization, extrusion coating and fluidized bed coating, melt injection, melt extrusion, centrifugal extrusion or dispersion in a host matrix.

**14.** An optical article manufactured according to a method for manufacturing an optical article according to any of the claims 1 to 13.

**15.** An optical article according to claim 14, wherein the optical article comprises a lens, an embossed polycarbonate (PC) film with concave or convex microstructures, a wafer, a multi-layered laminate or a film.

FIG. 1

Mie scattering function

x = 0.1

x = 1

x = 3

x = 10

Backward | Forward

FIG. 2

**FIG. 3**

**FIG. 4**

**Europäisches Patentamt**

**European Patent Office**

**Office européen des brevets**

# EUROPEAN SEARCH REPORT

Application Number

EP 23 30 6612

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/055447 A1 (CHO SEO-YONG [KR]) 4 March 2010 (2010-03-04) | 1,11,14, 15 | INV. B29D11/00 |
| A | * abstract * <br> * figures 6-8 * <br> * paragraphs [0071] - [0078] * | 2-10,12, 13 | |
| X | US 2020/241174 A1 (FROMENTIN PIERRE [TH] ET AL) 30 July 2020 (2020-07-30) | 1,11,14, 15 | |
| A | * abstract * <br> * figure 1 * <br> * paragraphs [0040] - [0047] * | 2-10,12, 13 | |
| X | WO 2022/171658 A1 (LUXEXCEL HOLDING BV [NL]) 18 August 2022 (2022-08-18) | 1,11,14, 15 | |
| A | * abstract * <br> * figures 1-2 * <br> * page 2, line 35 - page 3, line 30 * <br> * claims 1-19 * | 2-10,12, 13 | |
| X | WO 2023/127731 A1 (NIKON ESSILOR CO LTD [JP]) 6 July 2023 (2023-07-06) | 1,4-8, 11,14,15 | TECHNICAL FIELDS SEARCHED (IPC) |
| A | * abstract * <br> * figures 1-10 * <br> * paragraphs [0025] - [0046] * | 2,3,9, 10,12,13 | B29D <br> G02B <br> G02F |
| X | EP 4 091 805 A1 (ESSILOR INT [FR]) 23 November 2022 (2022-11-23) | 1,4-8, 11,14,15 | |
| A | * abstract * <br> * figures 1a-14 * <br> * paragraphs [0132] - [0140] * | 2,3,9, 10,12,13 | |
| X | US 2023/146460 A1 (JIANG PEIQI [US] ET AL) 11 May 2023 (2023-05-11) | 1,4-8, 11,14,15 | |
| A | * abstract * <br> * figures 1a-3e * <br> * paragraphs [0122] - [0148] * | 2,3,9, 10,12,13 | |

The present search report has been drawn up for all claims

| Place of search | Date of completion of the search | Examiner |
|---|---|---|
| The Hague | 16 May 2024 | Heckmann, Paul |

EPO FORM 1503 03.82 (P04C01)

Europäisches
Patentamt

European
Patent Office

Office européen
des brevets

**Application Number**

EP 23 30 6612

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

1. claims: 1-3, 11-15

   A method for manufacturing an optical article wherein the optically functional nanoparticles comprise light scattering nanoparticles and photoluminescence nanoparticles.

   - - -

2. claims: 4, 5, 7, 9, 10

   A method for manufacturing an optical article comprising shaping said optical coating to form a plurality of optically-improved micro-lenses.

   - - -

3. claims: 6, 8

   A method for manufacturing an optical article wherein the optical coating is encapsulated between upper and lower layers, wherein the lower layer is directly applied on the surface of the optical support element or incorporated as a layer within the optical support element.

   - - -

## ANNEX TO THE EUROPEAN SEARCH REPORT
## ON EUROPEAN PATENT APPLICATION NO.

EP 23 30 6612

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2024

| Patent document cited in search report | Publication date | Patent family member(s) | | Publication date |
|---|---|---|---|---|
| US 2010055447 A1 | 04-03-2010 | KR | 20100026929 A | 10-03-2010 |
| | | US | 2010055447 A1 | 04-03-2010 |
| US 2020241174 A1 | 30-07-2020 | BR | 112020002677 A2 | 28-07-2020 |
| | | CN | 110998372 A | 10-04-2020 |
| | | EP | 3441799 A1 | 13-02-2019 |
| | | EP | 3665515 A1 | 17-06-2020 |
| | | US | 2020241174 A1 | 30-07-2020 |
| | | WO | 2019030264 A1 | 14-02-2019 |
| WO 2022171658 A1 | 18-08-2022 | NONE | | |
| WO 2023127731 A1 | 06-07-2023 | NONE | | |
| EP 4091805 A1 | 23-11-2022 | BR | 112023021660 A2 | 19-12-2023 |
| | | CN | 117255742 A | 19-12-2023 |
| | | EP | 4091805 A1 | 23-11-2022 |
| | | EP | 4341079 A2 | 27-03-2024 |
| | | JP | 2024519100 A | 08-05-2024 |
| | | KR | 20240008836 A | 19-01-2024 |
| | | WO | 2022243207 A2 | 24-11-2022 |
| US 2023146460 A1 | 11-05-2023 | CN | 115398279 A | 25-11-2022 |
| | | EP | 3896499 A1 | 20-10-2021 |
| | | PL | 3896499 T3 | 22-04-2024 |
| | | PT | 3896499 T | 23-01-2024 |
| | | US | 2023146460 A1 | 11-05-2023 |
| | | WO | 2021209556 A1 | 21-10-2021 |

EPO FORM P0459

For more details about this annex : see Official Journal of the European Patent Office, No. 12/82